# DEMANDE DE BREVET EUROPEEN

(11) **EP 1 298 004 A1**
(43) Date de publication de la demande: **02.04.2003**
(21) Numéro de dépôt: 02292285.0
(22) Date de dépôt: 18.09.2002
(51) Int. Cl.: B60R 13/08

(54) **Panneau insonorisant moulé, et procédé de réalisation d'un tel panneau**

(30) Priorité: 21.09.2001 FR 0112218
(71) Demandeur: Centre d'Etude et de Recherche pour l'Automobile ( CERA), 51100 Reims (FR)
(72) Inventeur: Sares, Laurent, 51100 Reims (FR)
(74) Mandataire: Geismar, Thierry

(57) **Abrégé**

L'invention concerne un panneau insonorisant (1) du type comprenant une couche de matériau thermoplastique chargé (2) obtenue par moulage, ledit panneau (1) étant destiné à être fixé à au moins un élément rigide (3, 4) comprenant, sur sa surface, des organes d'ancrage (6, 7) dudit panneau (1) qui sont saillants et répartis de façon discrète, ledit panneau (1) comprenant des moyens de fixation moulés d'une seule pièce avec la couche de matériau thermoplastique (2) de sorte à être intégrés audit panneau (1), lesdits moyens de fixation comprenant au moins un logement (5) agencé pour recevoir au moins un organe d'ancrage (6, 7) et pour retenir ledit organe (6, 7) par contact serrant de la paroi interne (12) dudit logement (5) sur ledit organe.

## Description

L'invention concerne un panneau insonorisant, et un procédé pour la réalisation de ce panneau.

De tels panneaux sont notamment destinés aux véhicules automobiles, où ils sont utilisés pour isoler l'habitacle de l'environnement extérieur. En particulier, ils peuvent être fixés sur le tablier du véhicule automobile, pour atténuer le bruit occasionné à l'intérieur de l'habitacle par le moteur. Dans ce cas, la planche de bord peut venir recouvrir au moins la partie supérieure du panneau.

Ces panneaux sont actuellement réalisés sous la forme d'une plaque massive en matière plastique de densité élevée, appelée masse lourde, associée à un support faisant office de ressort, tel qu'une couche de feutre ou de mousse. La masse lourde, généralement réalisée par thermoformage, peut être une couche de matériau élastomère thermoplastique comprenant une charge minérale.

Le complexe constitué par la masse lourde et le ressort favorise, de par sa structure, l'amortissement des vibrations et présente par conséquent des propriétés d'isolation acoustique intéressantes.

Dans le cas où ce complexe est fixé au tablier d'un véhicule automobile, sa présence permet d'amortir les vibrations du tablier et par conséquent de réduire le bruit occasionné à l'intérieur de l'habitacle.

De par la nature des matériaux utilisés, ces panneaux insonorisants ont un poids élevé et une certaine souplesse qui rendent leur montage sur le tablier d'un véhicule délicat, d'autant plus que les opérateurs effectuant un tel montage travaillent partiellement « en aveugle ».

Pour permettre ce montage, il est connu de prévoir, dans ces panneaux, des ouvertures permettant de faire passer des éléments de fixation rapportés.

Ce mode de fixation du panneau insonorisant sur le tablier présente un certain nombre d'inconvénients.

Tout d'abord, les opérations de découpe des ouvertures ainsi que la présence d'éléments de fixation rapportés induisent un surcoût non négligeable.

En outre, la présence d'ouvertures dans le panneau nuit à l'isolation acoustique globale du panneau, car le bruit se propage alors à travers ces ouvertures sans être atténué.

Pour remédier à ces inconvénients, l'invention propose un panneau insonorisant comprenant des moyens de fixation intégrés qui sont agencés pour faciliter son montage sur au moins un élément rigide tel qu'un tablier et/ou une planche de bord.

En outre, pour fixer le panneau suivant l'invention, il n'est pas nécessaire de réaliser des ouvertures susceptibles de diminuer le rendement d'isolation acoustique du panneau.

A cet effet, et selon un premier aspect, l'invention a pour objet un panneau insonorisant du type comprenant une couche de matériau thermoplastique chargé obtenue par moulage, ledit panneau étant destiné à être fixé à au moins un élément rigide comprenant, sur sa surface, des organes d'ancrage dudit panneau qui sont saillants et répartis de façon discrète, ledit panneau comprenant des moyens de fixation moulés d'une seule pièce avec la couche de matériau thermoplastique de sorte à être intégrés audit panneau, lesdits moyens de fixation comprenant au moins un logement agencé pour recevoir au moins un organe d'ancrage et pour retenir ledit organe par contact serrant de la paroi interne dudit logement sur ledit organe.

Selon un deuxième aspect, l'invention a pour objet un procédé d'obtention d'un tel panneau, prévoyant le moulage par injection des moyens de fixation d'une seule pièce avec la couche de matériau thermoplastique.

D'autres objets et avantages de l'invention apparaîtront au cours de la description qui suit, faite en référence aux dessins annexés dans lesquels :
- la figure 1 est une vue en coupe verticale partielle d'un panneau insonorisant pourvu d'un moyen de fixation du panneau selon un premier mode de réalisation ;
- la figure 2 est une vue en coupe verticale partielle du panneau insonorisant de la figure 1 fixé sur le tablier d'un véhicule automobile ;
- la figure 3 est une vue de dessus partielle du moyen de fixation représenté sur les figures 1 et 2 ;
- la figure 4 est une vue en coupe verticale partielle d'un panneau insonorisant pourvu d'un moyen de fixation du panneau selon une variante du premier mode de réalisation ;
- la figure 5 est une vue en coupe verticale partielle d'un panneau insonorisant pourvu d'un moyen de fixation du panneau selon un deuxième mode de réalisation ;
- la figure 6 est une vue en coupe verticale partielle d'un panneau insonorisant pourvu d'un moyen de fixation du panneau selon une variante du deuxième mode de réalisation ;
- la figure 7 est une vue en coupe verticale partielle du panneau insonorisant de la figure 6 fixé entre la planche de bord et le tablier d'un véhicule automobile.

Le panneau insonorisant 1 selon l'invention est destiné à être fixé à au moins un élément rigide, tel qu'un tablier et/ou une planche de bord de véhicule automobile. Ce panneau 1 est typiquement formé d'une couche de matériau thermoplastique chargé 2 obtenue par un procédé de moulage.

En outre, une couche de mousse de type polyuréthanne ou une couche textile de type feutre est associée par tout moyen connu sur une surface de la couche de matériau thermoplastique 2.

De façon connue, cet ensemble, dans lequel la couche de matériau thermoplastique joue le rôle de masse lourde et la couche de mousse ou de feutre joue le rôle de ressort, permet d'amortir les vibrations et donc remplit une fonction d'isolation acoustique.

Ce type de panneau est avantageusement utilisé pour isoler l'intérieur de l'habitacle d'un véhicule automobile notamment des bruits du moteur.

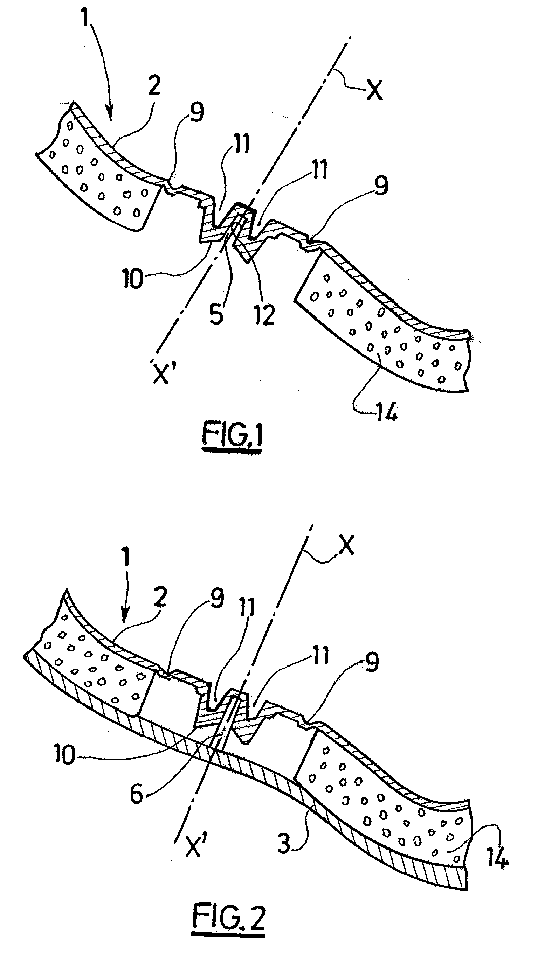

On décrit ci-dessous, en relation avec les figures 1 à 7, la réalisation d'un panneau insonorisant 1 pouvant être fixé aisément sur au moins un élément rigide tel qu'un tablier 3 et/ou une planche de bord 4.

Les éléments rigides 3, 4 sur lesquels les panneaux 1 sont destinés à être fixés comprennent des organes d'ancrage répartis de façon discrète. Ces organes d'ancrage sont des éléments saillants disposés à la surface de l'élément rigide 3, 4 qui sont agencés pour permettre la fixation du panneau 1 sur cet élément.

Pour permettre sa fixation, le panneau 1 comprend des moyens de fixation coopérant avec des organes d'ancrage de l'élément rigide 3, 4. A cet effet, les moyens de fixation sont prévus pour être disposés respectivement en regard des organes avec lesquels ils sont destinés à coopérer.

Ces moyens de fixation comprennent un ou plusieurs logements 5 dont la forme et la taille sont conçus pour s'adapter audits organes d'ancrage.

Selon un premier mode de réalisation, représenté sur les figures 1 à 4, les moyens de fixation sont agencés pour recevoir des organes d'ancrage en forme de picots 6.

En particulier, cette réalisation permet de fixer le panneau 1 sur la surface d'un tablier 3 de véhicule automobile pourvu de tels organes d'ancrage 6.

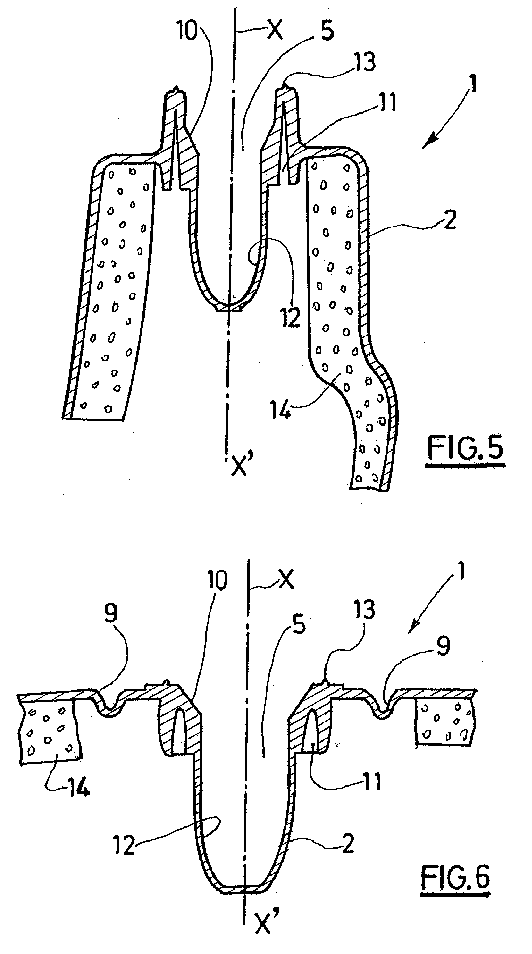

Selon un autre mode de réalisation, représenté sur les figures 5 à 7, les moyens de fixations sont agencés pour recevoir des organes d'ancrage en forme d'ogive 7.

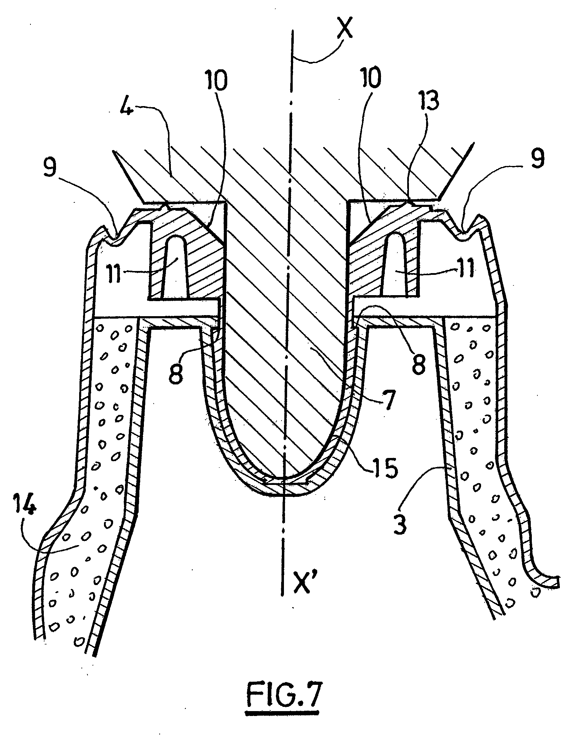

Dans l'exemple particulier de la figure 7, cette réalisation permet de fixer le panneau 1 entre le tablier 3 et la planche de bord 4 pourvue de tels organes d'ancrage. A cet effet, le tablier 3 peut être pourvu de logements 15 qui sont destinés à recevoir une ogive 7 introduite dans un moyen de fixation. Afin d'améliorer le maintien de l'organe d'ancrage 7 dans le logement 15 du tablier 3, celui-ci comprend un décrochement 8 faisant saillie en direction de la planche de bord 4.

En variante, les ogives 7 peuvent être reçues dans des orifices prévus dans le tablier 3.

Cette réalisation permet à la fois de fixer le panneau 1 entre le tablier 3 et la planche de bord 4 et d'immobiliser la planche de bord 4 par rapport au tablier 3.

Les moyens de fixation du panneau 1 présentent l'avantage d'être moulés d'une seule pièce avec la couche de matériau thermoplastique chargé 2, de sorte à être directement intégrés audit panneau 1.

Ainsi, la fixation du panneau 1 à l'élément rigide 3, 4 ne nécessite ni la réalisation d'ouvertures ni l'utilisation de moyens de fixation rapportés.

Dans une première étape de montage du panneau 1 sur l'élément rigide 3, 4, le panneau 1 est disposé de sorte que chaque logement 5 soit placé sensiblement en regard de l'organe d'ancrage 6, 7 avec lequel il doit coopérer. Ainsi, en introduisant, lors d'une deuxième étape, chaque organe 6, 7 dans chaque logement 5, le panneau 1 peut être fixé à l'élément rigide 3, 4.

Toutefois, compte tenu des dispersions dimensionnelles pouvant exister notamment dans le positionnement des organes, il peut être souhaitable de prévoir des moyens favorisant le placement d'un logement 5 exactement en regard de l'organe 6, 7 avec lequel il doit coopérer.

Selon une réalisation représentée sur les figures 1-2 et 6-7, ces moyens peuvent être formés d'un soufflet circulaire ou oblong concentrique 9 situé à distance du logement 5.

Ainsi, lors de la deuxième étape de montage du panneau 1, la présence de ce soufflet 9 permet à l'opérateur de déplacer le logement autour de son axe X, et ainsi de positionner parfaitement chaque logement 5 en face de l'organe d'ancrage 6, 7 correspondant. L'utilité d'un tel soufflet 9 est accentuée par le fait que le montage est effectué partiellement « en aveugle ».

Toutefois, il peut être prévu que le panneau 1 comprenne des soufflets circulaires 9 autour de certains logements seulement.

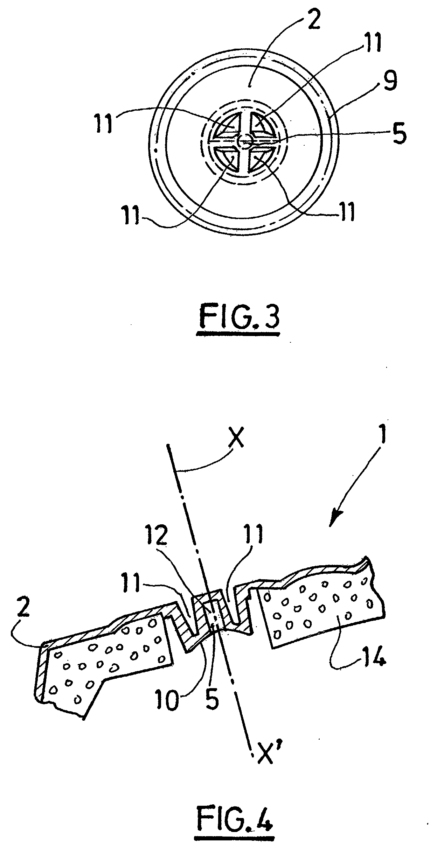

Cette réalisation permet, lors de la deuxième étape, d'introduire les organes 6, 7 dans les logements 5 complémentaires qui sont dépourvus de soufflets 9 (figures 4 et 5) de sorte à permettre un positionnement précis. Puis, compte tenu des dispersions dimensionnelles, les autres organes peuvent être introduits dans les logements 5 pourvus de soufflets 9.

Dans un exemple particulier, les logements 5 dépourvus de soufflets 9 sont ceux disposés dans la partie centrale du panneau 1. Ainsi, le panneau 1 est d'abord fixé par sa partie centrale, puis les bords sont fixés avec possibilité de rattrapage du jeu entre le positionnement respectivement des logements 5 et des organes 6, 7.

Pour faciliter l'introduction des organes 6, 7 dans les logements 5, ces derniers comprennent une ouverture 10 évasée.

En outre, le panneau 1 comprend, dans la couche de matériau thermoplastique chargé 2, au moins un évidement 11 disposé autour de chaque logement 5 et sensiblement adjacent à lui.

Ces évidements 11, en rendant l'épaisseur de la couche de matériau thermoplastique 2 sensiblement constante, permettent un moulage plus aisé de la couche de matériau thermoplastique 2.

En outre, en rendant visible la position du logement 5 pour l'opérateur devant fixer le panneau 1, les évidements 11 contribuent à faciliter le montage.

Sur les figures, les évidements 11 sont répartis sur la surface de la couche de matériau thermoplastique chargé 2, autour de chaque logement 5. En particulier, la figure 3 est une vue de dessus d'un logement 5 entouré de quatre évidements 11.

Pour assurer une fixation fiable du panneau 1 sur l'élément rigide 3, 4, il est nécessaire que les logements 5 retiennent les organes d'ancrage 6, 7 de façon durable.

A cet effet, la paroi interne 12 des logements 5 est agencée pour retenir les organes 6, 7 par contact serrant, de sorte à maintenir le panneau 1 en place, une fois celui-ci fixé à l'élément rigide 3, 4.

Dans un exemple particulier, la couche thermoplastique 2 peut être élastomérique de sorte qu'après introduction en force de l'organe 6, 7 dans le logement 5, un bon contact serrant soit obtenu.

En outre, les matériaux élastomériques sont particulièrement performants dans le cadre d'une utilisation comme isolant acoustique dans des ensembles masse-ressort.

Par ailleurs, le panneau 1 comprend, autour de chaque logement 5, une lèvre 13 destinée à assurer l'étanchéité entre le panneau 1 et l'élément rigide 3, 4. Cette lèvre 13 est disposée sur la surface de la couche de matériau thermoplastique chargé 2, de sorte à venir en contact avec l'élément rigide 3, 4 lors de la fixation du panneau 1. Elle permet donc non seulement d'assurer un bon contact entre le panneau 1 et l'élément rigide 3, 4, mais également d'améliorer l'étanchéité acoustique.

Selon une réalisation, le même panneau 1 comprend :
- un premier ensemble de moyens de fixation dont les logements 5 s'étendent selon une première direction sensiblement radiale X, par exemple tels que ceux représentés sur les figures 1 à 4, de sorte à permettre la fixation dudit panneau 1 sur le tablier 3 en mettant en appui une première face dudit panneau 1 sur la surface du tablier 3, et
- un deuxième ensemble de moyens de fixation dont les logements 5 s'étendent selon une direction X' sensiblement opposée à la première direction X, par exemple tels que ceux représentés sur les figures 5 à 7, de sorte à permettre la fixation dudit panneau 1 sur la planche de bord 4 en mettant en appui la face dudit panneau 1 opposée à la première sur la surface de la planche de bord 4.

En variante, les premier et deuxième ensemble de moyens de fixation sont disposés pour que le panneau 1 soit fixé entre le tablier 3 et la planche de bord 4.

Ainsi, le panneau 1 peut être d'abord fixé sur le tablier 3 par l'intermédiaire des moyens du premier ensemble puis la planche de bord 4 peut être disposée sur le panneau 1 et fixée à lui par l'intermédiaire des moyens du deuxième ensemble, de sorte à être en appui sur le tablier 3.

En particulier, la planche de bord 4 devant généralement être disposée sur la partie supérieure du tablier 3, les moyens du deuxième ensemble sont prévus sur la partie supérieure du panneau 1.

Dans les modes de réalisation représentés, la couche de mousse 14 s'arrête à une certaine distance des moyens de fixation, de sorte à ne pas les enrober. Cette réalisation permet d'éviter certains effets parasites pour l'acoustique. En variante non représentée, on peut cependant prévoir que les moyens de fixation soient au moins partiellement enrobés par ladite couche de mousse 14.

Par ailleurs, la planche de bord 4 est typiquement placée sur la partie supérieure de l'une des faces du panneau 1, de telle sorte que la partie inférieure de cette face demeure visible depuis l'habitacle. On peut alors prévoir d'habiller cette partie inférieure d'une couche de revêtement de finition, telle qu'une moquette.

Selon une réalisation, la couche de matériau thermoplastique comprend entre environ 10 et 50% en poids d'EPDM, et entre environ 90 et 50% en poids de charge minérale.

Les EPDM (éthylène propylène diène monomère) sont des matières plastiques élastomériques souvent obtenues par recyclage. Elles présentent l'avantage de pouvoir être à leur tour facilement recyclées.

Toutefois, d'autres élastomères thermoplastiques tels que l'EVA ou l'EPM peuvent être utilisés.

La charge minérale peut comprendre du sulfate de baryum, du carbonate de calcium (craie) et/ou de l'hydroxyde de baryum.

La couche de matériau thermoplastique chargé 2 est obtenue par moulage, notamment moulage par injection suivi le cas échéant d'une étape de compression qui permet dans le cas d'un matériau fortement chargé de diminuer la pression d'injection.

Le fait de mouler le matériau thermoplastique présente notamment l'avantage de pouvoir contrôler et moduler l'épaisseur de la couche 2 tout en permettant d'intégrer les moyens de fixation d'une seule pièce avec le panneau 1.

## Revendications

1. Panneau insonorisant (1) du type comprenant une couche de matériau thermoplastique chargé (2) obtenue par moulage, ledit panneau (1) étant destiné à être fixé à au moins un élément rigide (3, 4) comprenant, sur sa surface, des organes d'ancrage (6, 7) dudit panneau (1) qui sont saillants et répartis de façon discrète, ledit panneau (1) étant **caractérisé en ce qu'**il comprend des moyens de fixation moulés d'une seule pièce avec la couche de matériau thermoplastique (2) de sorte à être intégrés audit panneau (1), lesdits moyens de fixation comprenant au moins un logement (5) agencé pour recevoir au moins un organe d'ancrage (6, 7) et pour retenir ledit organe (6, 7) par contact serrant de la paroi interne (12) dudit logement (5) sur ledit organe.

2. Panneau (1) selon la revendication 1, **caractérisé en ce que** le logement (5) comprend une ouverture (10) de forme évasée, agencée pour faciliter l'introduction dudit organe d'ancrage (6,7) dans ledit logement (5).

3. Panneau (1) selon la revendication 1 ou 2, **caractérisé en ce que** la couche de matériau thermoplastique chargé (2) comprend en outre des moyens prévus pour faciliter le placement dudit logement (5) en regard dudit organe d'ancrage (6, 7) lors de la fixation du panneau (1) sur l'élément rigide (3, 4).

4. Panneau (1) selon la revendication 3, **caractérisé en ce que** les moyens facilitant le placement dudit logement (5) en regard dudit organe d'ancrage (6, 7) lors de la fixation du panneau (1) sur l'élément rigide (3, 4) sont formés d'un soufflet circulaire ou oblong concentrique (9) disposé à distance dudit logement (5).

5. Panneau (1) selon l'une quelconque des revendications précédentes, **caractérisé en ce qu'**une lèvre d'étanchéité (13) est prévue sur la surface de la couche de matériau thermoplastique chargé (2), de sorte à venir en contact avec l'élément rigide (3, 4) lors de la fixation du panneau (1).

6. Panneau (1) selon l'une quelconque des revendications précédentes, **caractérisé en ce qu'**il comprend :
- un premier ensemble de moyens de fixation dont les logements (5) s'étendent selon une première direction sensiblement radiale (X), de sorte à permettre la fixation dudit panneau (1) sur un premier élément (3) en mettant en appui une première face dudit panneau (1) sur la surface du premier élément (3), et
- un deuxième ensemble de moyens de fixation dont les logements (5) s'étendent selon une direction (X') sensiblement opposée à la première direction (X), de sorte à permettre la fixation dudit panneau (1) sur un deuxième élément (4) en mettant en appui la face dudit panneau (1) opposée à la première sur la surface du deuxième élément (4).

7. Panneau (1) selon la revendication 6, **caractérisé en ce que** les premier et deuxième ensemble de moyens de fixation sont disposés pour que le panneau (1) soit fixé entre le premier (3) et le deuxième élément (4).

8. Panneau (1) selon l'une quelconque des revendications précédentes, **caractérisé en ce que** le matériau thermoplastique est élastomérique.

9. Panneau (1) selon la revendication 8, **caractérisé en ce qu'**il est formé d'une couche de matériau thermoplastique chargé (2) comprenant :
- entre environ 10 et 50% en poids d'EPDM ;
- entre environ 90 et 50% en poids de charge minérale.

10. Panneau (1) selon l'une quelconque des revendications précédentes, **caractérisé en ce que** la couche de matériau thermoplastique chargé (2) est associée à une couche faisant office de ressort, par exemple formée d'une couche de mousse (14) de type polyuréthanne ou d'une couche textile de type feutre.

11. Panneau (1) selon l'une quelconque des revendications précédentes, **caractérisé en ce qu'**il est habillé au moins partiellement d'une couche de revêtement de finition sur au moins l'une de ses faces.

12. Procédé d'obtention d'un panneau insonorisant (1) selon l'une quelconque des revendications précédentes, **caractérisé en ce qu'**il prévoit le moulage par injection des moyens de fixation d'une seule pièce avec la couche de matériau thermoplastique (2).

13. Procédé selon la revendication 12, **caractérisé en ce qu'**une étape de compression est réalisée après l'injection.
